# EUROPÄISCHE PATENTSCHRIFT

(11) **EP 3 212 372 B1**
(45) Veröffentlichungstag und Bekanntmachung des Hinweises auf die Patenterteilung: **18.03.2020**
(21) Anmeldenummer: 15775718.8
(22) Anmeldetag: 08.10.2015
(51) Int. Cl.: B29B 11/14, B29C 49/08, B65D 79/00, B29C 49/06

(54) **STRECKGEBLASENER KUNSTSTOFFBEHÄLTER, INSBESONDERE KUNSTSTOFFFLASCHE, ZUR KOMPENSATION VON VOLUMENSÄNDERUNGEN DES FÜLLGUTS, UND VORFORMLING**
STRETCH BLOW-MOLDED PLASTIC CONTAINER, IN PARTICULAR PLASTIC BOTTLE, FOR COMPENSATING VOLUME CHANGES OF THE FILLING MATERIAL, AND PREFORM
RÉCIPIENT EN MATIÈRE PLASTIQUE FORMÉ PAR SOUFFLAGE-ÉTIRAGE, NOTAMMENT BOUTEILLE EN MATIÈRE PLASTIQUE, POUR LA COMPENSATION DE VARIATIONS DE VOLUME DU PRODUIT LIQUIDE, ET PRÉFORME

(30) Priorität: 29.10.2014 CH 16622014
(43) Veröffentlichungstag der Anmeldung: 06.09.2017
(73) Patentinhaber: Alpla Werke Alwin Lehner GmbH & Co. KG, 6971 Hard (AT)
(72) Erfinder: SIEGL, Robert, A-6850 Dornbirn (AT)
(74) Vertreter: Bohest AG Branch Ostschweiz
(86) Internationale Anmeldenummer: PCT/EP2015/073292
(87) Internationale Veröffentlichungsnummer: WO 2016/066397

(56) Entgegenhaltungen:
- EP-A1- 1 598 167
- WO-A1-03/055663
- DE-U1- 20 314 295

## Beschreibung

Die Erfindung betrifft in einem Streckblasverfahren hergestellte Kunststoffbehälter, insbesondere Kunststoffflaschen, welche eine Kompensation einer Volumensänderung des abgefüllten Füllguts erlauben, gemäss dem Oberbegriff des Patentanspruchs 1.

Kunststoffbehältern und Preforms zur Herstellung von Kunststoffbehältern werden in EP1598167, DE20314295U und WO03055663 offenbart.

Die in der Vergangenheit üblichen Behältnisse aus Weiss- oder Buntblech, aus Glas oder auch aus Keramik werden in zunehmendem Mass von Behältnissen aus Kunststoff abgelöst. Insbesondere für die Verpackung fluider Substanzen, beispielsweise von Getränken, fliessfähigen Lebensmitteln wie z.B. Ketchup, Sugo, Pesto, Saucen, Senf, Mayonnaise und dergleichen, Haushaltsprodukten, Pflegeprodukten, Kosmetika usw., kommen mittlerweile hauptsächlich Kunststoffbehältnisse zum Einsatz. Das geringe Gewicht und die geringeren Kosten spielen sicher eine nicht unerhebliche Rolle bei dieser Substitution. Die Verwendung rezyklierbarer Kunststoffmaterialien, die Verwendung von Biokunststoffen und die insgesamt günstigere Gesamtenergiebilanz bei ihrer Herstellung tragen auch dazu bei, die Akzeptanz von Kunststoffbehältnissen, insbesondere von Kunststoffflaschen, beim Konsumenten zu fördern.

Eine grosse Zahl der heutzutage eingesetzten Kunststoffflaschen und dergleichen Kunststoffbehälter wird in einem Streckblasverfahren hergestellt. Bei diesem Verfahren wird zunächst ein sogenannter Preform von üblicherweise länglicher, röhrchenartiger Gestalt hergestellt, der an seinem einen Längsende mit einem Boden verschlossen ist und am anderen Längsende einen Halsabschnitt mit Mitteln zur formschlüssigen Festlegung eines mit korrespondierenden Eingriffsmitteln ausgestatteten Verschlussteils aufweist. Die Mittel zur formschlüssigen Festlegung eines Verschlussteils können beispielsweise an der Aussenwandung des Halsteils ausgebildete Gewindeabschnitte oder bajonettartige Vorsprünge oder entsprechende Vertiefungen sein. Die Herstellung des Preforms erfolgt meist in einem Spritzgiessverfahren. Es sind jedoch auch alternative Herstellverfahren für Preforms bekannt, beispielsweise Fliesspressen oder Extrusionsblasen. Die Herstellung der Preforms kann zeitlich und/oder räumlich getrennt vom nachfolgenden Streckblasverfahren erfolgen. In einem alternativen Verfahren wird der hergestellte Preform ohne zwischenzeitliche Abkühlung unmittelbar nach seiner Herstellung weiter verarbeitet. Zum Streckblasen wird der Preform in eine Formkavität einer Blasform eingesetzt und durch ein mit Überdruck eingebrachtes Fluid, üblicherweise Luft, in radialer und axialer Richtung aufgeweitet, insbesondere aufgeblasen. Dabei wird der Preform zusätzlich mit einem durch die Halsöffnung des Preforms eingefahrenen Reckdorn in axiale Richtung gereckt. Nach dem Reck-/Blasvorgang wird der fertige Kunststoffbehälter aus der Blasform entformt.

In verschiedenen Anwendungen werden die Kunststoffbehälter, beispielsweise aus Sterilitätsgründen oder um die Fliesseigenschaften des Füllgutes zu verbessern, heiss oder zumindest warm abgefüllt. Unter einer Heissabfüllung ist dabei üblicherweise eine Abfüllung des Füllguts bei einer Temperatur von 60°C bis 100°C zu verstehen. Nach dem Abfüllen werden die Behälter beispielsweise mit einer Siegelmembran dicht verschlossen und gekippt, um die Membran zu benetzen. Beim Abkühlen des Füllguts und des Kopfraumes, bei einer Reaktion des Füllgutes mit Gasen im Kopfraum, durch einen Phasensprung von Gasen (Dampf zu Wasser) oder auch bei einer intensiveren Lösung von Gasen mit dem Füllgut kann sich innerhalb des Behälters ein Vakuum ausbilden, welches zur Folge haben kann, dass sich der Behälter verformt. Die Verformung ist eine Folge der Druckdifferenz zwischen dem von aussen auf die Behälterwandungen einwirkenden Atmosphärendruck und dem infolge des Abkühlens oder der oben benannten Effekte im Inneren entstehenden Unterdruck.

Andererseits kann kurz nach dem Abfüllen, beispielsweise durch das Abdampfen der Flüssigkeit, durch Ausgasen des Produktes oder durch eine erhöhte Temperatur des Füllguts im Behälterhals bzw. im Kopfraum des Behälters auch ein Überdruck entstehen. Nach dem Abkühlen des Behälters kommt es jedoch zumeist zu einem Unterdruck, da die Gase im Kopfraum und das Füllgut selbst durch den Temperaturunterschied ihr Volumen stark verändern, insbesondere verringern. Ein Unterdruck kann auch dadurch entstehen, dass ein Teil des im Kopfraum enthaltenen Gases sich im Füllgut löst bzw. mit diesem chemisch reagiert. Beispielsweise können Vitamin C haltige Produkte oder ungesättigte Fettsäure enthaltende Produkte mit dem Sauerstoff im Kopfraum reagieren und dadurch zu einem Unterdruck führen.

Auch kann es vorkommen, dass bestimmte Inhaltsstoffe den Kunststoffbehälter durch Migrationsvorgänge durch die Behälterwandung verlassen und einen Unterdruck zurück lassen. So kann beispielsweise der Wasserverlust bei PET Gebinden schon nach einem Jahr ein halbes bis ein Prozent betragen. Bei besonders dünnwandigen PET Flaschen oder bei PET Flaschen, die bei hoher Temperatur gelagert werden, kann dieser Verlust sogar noch höher sein. Bei anderen Materialien, wie z.B. bei PLA, Polystyrol kann ein Wasserverlust in der angegebenen Grössenordnung auch schon nach viel kürzerer Zeit auftreten. Zum Teil kann eine Volumenskontraktion bereits durch ein kühleres Umfeld, (Kühlschrank) eine kühlere Jahreszeit (Winter) oder spezifische geografische Breiten (kalte Regionen) auftreten.

Auch die Abfüllung und der Vertrieb von Kunststoffflaschen in unterschiedlichen Höhen über dem Meeresspiegel können zu Verformungen führen. So besteht bei Kunststoffflaschen, die beispielsweise in der Höhe von Mexiko City abgefüllt werden und dann an die Küste transportiert und angeboten werden, die Gefahr einer Verformung aufgrund des an der Küste herrschenden grösseren Luftdrucks. Zwar hat diese Verformung der Kunststoffbehälter im allgemeinen keine Auswirkungen auf die Qualität des Füllguts. Für den Konsumenten ist aber oftmals die äussere Erscheinungsform eines Verkaufsartikels entscheidend für seine Wahl. Ein Kunststoffbehälter, der Deformationen aufweist, kann daher oftmals zu der irrtümlichen Annahme des Kunden führen, dass das im Behälter enthaltene Produkt nicht mehr die gewünschten Qualitätseigenschaften aufweist.

Dieser Tendenz, sich beim Abkühlen des warm oder heiss abgefüllten Füllguts zu verformen, kann zwar durch eine grössere Wandstärke der Kunststoffbehälter entgegengewirkt werden. Durch den erhöhten Materialbedarf verteuert sich jedoch die Herstellung dieser Kunststoffbehälter und ihr Gewicht nimmt zu. Es sind auch Lösungen bekannt, bei denen entlang der axialen Erstreckung der Kunststoffbehälter Rippen und Rillen als Versteifungen vorgesehen sind. Die mechanischen Versteifungen bedingen meist speziell geformte Extrusionsdüsen bzw. Spritzdüsen zur Herstellung der Preforms und eine besondere Prozessführung. Aus dem Stand der Technik sind auch Kunststoffflaschen bekannt, die über ihren Umfang verteilt verformbare Bereiche aufweisen, welche die Druckunterschiede ausgleichen sollen. Diese verformbaren Bereiche sind aber wiederum für das Anbringen von Etiketten auf der Flaschenoberfläche hinderlich. Auch sind bereits Kunststoffbehälter mit einem flexiblen Boden bekannt, der Druckunterschiede ausgleichen soll. Abgesehen davon, dass die Herstellung derartiger flexibler Böden sehr aufwendig und teuer ist und damit nur relativ kleine Druckunterschiede kompensiert werden können, kann ein flexibler Boden zu Problemen mit der Standfestigkeit des Behälters führen.

Andererseits kann es aber auch zu einer Volumensvergrösserung des Füllguts kommen, beispielsweise bei der Pasteurisation, bei der der gefüllte und verschlossene Kunststoffbehälter beispielsweise heiss geduscht wird. Diese Volumensvergrösserung kann zu einer Ausbauchung des Behälterkörpers oder sogar zu einer Ausstülpung des Behälterbodens führen, was die Standfestigkeit des Behälters beeinträchtigen kann. Beiden Effekten, die höchst unerwünscht sind, wird üblicherweise durch eine entsprechend erhöhte Wandstärke im Behälterkörper und/oder dem Behälterboden begegnet. Durch den erhöhten Materialbedarf verteuert sich jedoch die Herstellung dieser Kunststoffbehälter und ihr Gewicht nimmt zu.

Aufgabe der vorliegenden Erfindung ist es daher, diesen Nachteilen der Kunststoffbehälter des Stands der Technik abzuhelfen. Es soll ein in einem Streckblasverfahren herstellbarer Kunststoffbehälter, insbesondere eine Kunststoffflasche, geschaffen werden, der eine Kompensation einer Volumensänderung des abgefüllten Füllguts erlaubt. Der Kunststoffbehälter soll einfach und kostengünstig herstellbar sein. In einer Weiterbildung der Erfindung soll der Kunststoffbehälter auch für die Verwendung in Verbindung mit einem Verschlussteil geeignet sein, welches eine "Kopfüberlagerung" des Behälters auf einer Deckplatte des Verschlussteils erlaubt.

Die Lösung dieser und noch weiterer Aufgaben besteht in einem Kunststoffbehälter, insbesondere einer Kunststoffflasche, welcher die im Patentanspruch 1 aufgelisteten Merkmale aufweist. Weiterbildungen und/oder bevorzugte Ausführungsvarianten der Erfindung sind Gegenstand der abhängigen Patentansprüche.

Der erfindungsgemässe Kunststoffbehälter besitzt einen Behälterkörper, dessen eines Längsende von einem Behälterboden verschlossen ist und an dessen anderes Längsende ein Schulterabschnitt anschliesst, sowie einen Behälterhals, der an den Schulterabschnitt anschliesst. Der Schulterabschnitt weist wenigstens zwei in Umfangsrichtung verlaufende scharnierartige Bereiche auf, die in einem Abstand voneinander angeordnet sind und eine gegenüber den angrenzenden Bereichen verringerte Wandstärke besitzen. Der streckgeblasene Kunststoffbehälter weist ein Gesamtstreckverhältnis grösser 11 bei einem Längsstreckverhältnis von 2,5 bis 3,5 auf.

Zum Unterschied von den Kunststoffbehältern des Stands der Technik, welche am Übergang des Behälterhalses zu Schulterabschnitt eine grosse Wandstärke besitzen und mit einem Radius versehen sind, um eine Eintauchen des Behälterhalses zu verhindern, ist der erfindungsgemäss ausgebildete Kunststoffbehälter im Schulterabschnitt mit wenigstens zwei scharnierartigen Bereichen ausgestattet, welche gerade eine axiale Beweglichkeit des Behälterhalses ermöglichen. Der Übergang des Behälterhalses zum Schulterabschnitt ist am scharnierartigen Bereich überdies möglichst "scharfkantig" ausgebildet, um die axiale Beweglichkeit des Behälterhalses noch zu unterstützen. Durch diese axiale Beweglichkeit des Behälterhalses besitzt der Kunststoffbehälter die Möglichkeit, eine Volumensänderung des darin abgefüllten Füllguts zu kompensieren. Auf diese Weise kann beispielsweise einer Vakuumbildung im Inneren des Behälters Rechnung getragen werden. Indem sich der Behälterhals axial in Richtung des Behälterinneren bewegen kann, wird das Vakuum kompensiert. Dadurch kann vermieden werden, dass sich der Behälterkörper verformt.

Das durch die wenigstens zwei scharnierartigen Bereiche ermöglichte Eintauchen des Behälterhalses kann durch eine geeignete Wahl eines Verschlussteils verborgen werden. Derartige Verschlussteile weisen beispielsweise deutlich grössere Abmessungen auf, als es der Öffnungsdurchmesser am Behälterhals erfordern würde. Die eine verhältnismässig grossen Durchmesser aufweisende Deckplatte eines derartigen Verschlussteils erlaubt es, den Kunststoffbehälter auch kopfüber stabil zu lagern. Zudem besitzen sie einen äusseren Mantel, der sich zum Schulterabschnitt des Kunststoffbehälters erstreckt und sogar auf diesem abstützen kann. Die axiale Länge des äusseren Mantels kann derart bemessen sein, dass sich dieser bei einem maximalen Eintauchen des Behälterhalses gerade auf dem Schulterabschnitt abstützt. Die Kompensation einer Vakuumbildung innerhalb des Kunststoffbehälters ist bei aufgesetztem Verschlussteil von aussen kaum bemerkbar. Entweder sitzt der Mantel des Verschlussteils auf dem Schulterabschnitt auf, oder es verbleibt ein Ringspalt zwischen dem freien Ende des Mantels des Verschlussteils und dem Schulterabschnitt, dessen Weite sich von Behälter zu Behälter nur geringfügig unterscheidet. Die gelenkartigen Bereiche im Schulterabschnitt erlauben aber auch eine begrenzte axiale Bewegung des Behälterhalses in die Gegenrichtung, aus dem Behälterinneren heraus. Dadurch kann eine Volumensvergrösserung des Füllguts, beispielsweise infolge eines Heissduschens zur Pasteurisation, kompensiert werden.

Das für die Erzeugung der scharnierartigen Bereiche erforderliche hohe Gesamtstreckverhältnis des streckgeblasenen Kunststoffbehälters von grösser 11 bei einem Längsstreckverhältnis von 2,5 bis 3,5 führt beispielsweise bei PET als Ausgangsmaterial gerade am Übergangsbereich vom Behälterhals zum Schulterabschnitt zu einer deutlich besseren Verstreckung. Durch die hohe Verstreckung erhält das Kunststoffmaterial in den Bereichen ausserhalb der scharnierartigen Bereiche eine grössere Steifigkeit. Zudem weist hoch verstrecktes PET auch deutlich bessere Barriereeigenschaften gegenüber Sauerstoff auf. Durch die hohe Verstreckung weist der Kunststoffbehälter gerade am Übergang vom Behälterhals zum Schulterabschnitt und auch im Schulterabschnitt selbst eine relativ geringe Wandstärke auf. Die Dünnwandigkeit des Kunststoffbehälters in diesem Bereich kann wiederum durch die Wahl eines geeigneten Verschlussteils mit einem äusseren Mantel, der auf dem Schulterabschnitt aufliegen kann, aufgefangen werden.

Die beiden scharnierartigen Bereiche setzen sich aus einem dem Behälterhals näher liegenden inneren scharnierartigen Bereich und aus einem davon beabstandeten äusseren Scharnierbereich zusammen. Der innere scharnierartige Bereich kann eine erste Wandstärke aufweisen, die kleiner ist als 0,7 mm, während der äussere scharnierartige Bereich eine zweite Wandstärke aufweist, die 0,05 mm bis 0,4 mm, vorzugsweise 0,1 mm bis 0,3 mm, beträgt. Bei diesen Wandstärken weisen die scharnierartigen Bereiche eine ausreichende axiale Beweglichkeit infolge der bei der Volumensänderung, insbesondere Vakuumbildung oder Ausdehnung, des Füllguts auftretenden Kräfte auf, um diese zuverlässig kompensieren zu können.

In einer Ausführungsvariante der Erfindung können die scharnierartigen Bereiche für eine reversible negative (Stauchung) und/oder reversible positive (Streckung) Auslenkung des Behälterhalses in axiale Richtung ausgebildet sein. Die Reversibilität der axialen Auslenkung des Behälterhalses kann als ein Indikator für die Unversehrtheit des im Behälter untergebrachten Füllguts eingesetzt werden. Wird das Verschlussteil nämlich manipuliert oder abgenommen, insbesondere abgeschraubt, kehrt der Behälterhals wieder in seine Ausgangslage zurück. Erfolgt daher beim Erstöffnen des Kunststoffbehälters durch Abnehmen des Verschlussteils keine Bewegung des Behälterhalses, kann dies der Konsument als ein Indiz dafür ansehen, dass das Verschlussteil bereits zuvor einmal geöffnet worden ist und das im Behälter untergebrachte Füllgut möglicherweise manipuliert wurde.

Für eine Kompensation von üblichen Volumensänderungen des im Kunststoffbehälter untergebrachten Füllguts infolge Vakuumbildung oder Ausdehnung, z.B. bei der Pasteurisation, kann eine reversible Auslenkbarkeit des Behälterhalses von etwa + 2 mm bis etwa + 5 mm als ausreichend angesehen werden.

Damit die axiale Beweglichkeit des Behälterhalses im gewünschten Umfang gewährleistet ist, kann sich ein entlang der Behälterschulter gemessener Abstand der scharnierartigen Bereiche voneinander als zweckmässig erweisen, der 5mm bis 25mm beträgt.

Damit die scharnierartigen Bereiche im Schulterabschnitt die äussere Erscheinungsform des Kunststoffbehälters nicht beeinträchtigen, können sie radial innerhalb eines Abstützbereichs für einen äusseren Mantel eines auf den Behälterhals aufbringbaren Verschlussteils angeordnet sein.

Die erfindungsgemässe Ausbildung ist bei den unterschiedlichsten Arten von Kunststoffbehältern, insbesondere Kunststoffflaschen, anwendbar. Der Kunststoffbehälter kann ein-oder mehrschichtig ausgebildet sein. Bedingung ist nur, dass er aus für das Streckblasverfahren geeigneten Kunststoffen gefertigt ist. Beispiele für derartige Kunststoffe sind PET, PET-G, HDPE, PP, PS, PVC, PEN, Copolymere der angeführten Kunststoffe, Biokunststoffe wie beispielsweise PLA oder PEF, gefüllte Kunststoffe und Mischungen der genannten Kunststoffe. Die Kunststoffe oder Teile davon können eingefärbt und/oder beschichtet sein.

Die erfindungsgemässe Ausbildung des Kunststoffbehälters ist zwar nicht an einen bestimmten Querschnitt des Behälterkörpers und das Schulterabschnitts gebunden. In einer Variante der Erfindung weisen der Behälterkörper und der daran anschliessende Schulterabschnitt jedoch einen von der Kreisform abweichenden Querschnitt auf. Beispielsweise besitzen der Behälterkörper und der daran anschliessende Schulterabschnitt einen ovalen Querschnitt, da derartige Kunststoffbehälter vielfach in Verbindung mit Verschlussteilen eingesetzt werden, welche einen deutlich grösseren Querschnitt aufweisen, als es der Querschnitt der Ausgiessöffnung des Behälters erfordern würde, und einen von einer Deckplatte abragenden äusseren Mantel besitzen, der sich im aufgesetzten Zustand des Verschlussteils auf dem Schulterabschnitt des Behälters abstützen kann. Mit einem derartigen Verschlussteil ausgestattet kann der Kunststoffbehälter auch kopfüber stabil gelagert werden. Dies erleichtert eine möglichst restlose Entleerung des Kunststoffbehälters von seinem üblicherweise pastösen Füllgut, wie z.B. Ketchup, Senf, Pesto, etc.

Ein Preform zur Herstellung eines Kunststoffbehälters der im Vorhergehenden geschilderten Art in einem Streckblasverfahren weist einen länglichen, röhrchenartigen Preformkörper auf, der an seinem einen Längsende mit einem Boden verschlossen ist und am anderen Längsende einen Halsabschnitt aufweist. Am Halsabschnitt können Mittel zur formschlüssigen Festlegung eines mit korrespondierenden Eingriffsmitteln ausgestatteten Verschlussteils ausgebildet sein. Die Mittel zur formschlüssigen Festlegung eines Verschlussteils können beispielsweise an der Aussenwandung des Halsteils ausgebildete Gewindeabschnitte oder bajonettartige Vorsprünge oder entsprechende Vertiefungen sein. Die Herstellung des Preforms erfolgt meist in einem Spritzgiessverfahren. Es sind jedoch auch alternative Herstellverfahren für Preforms bekannt, beispielsweise Fliesspressen oder Extrusionsblasen. Die Herstellung der Preforms kann zeitlich und/oder räumlich getrennt vom nachfolgenden Streckblasverfahren erfolgen. In einem alternativen Verfahren kann der hergestellte Preform ohne zwischenzeitliche Abkühlung unmittelbar nach seiner Herstellung weiter verarbeitet werden. Zum Streckblasen wird der Preform in eine Formkavität einer Blasform eingesetzt und durch ein mit Überdruck eingeblasenes Medium, üblicherweise Luft, in radialer und axialer Richtung aufgeweitet, insbesondere aufgeblasen. Dabei wird der Preform zusätzlich mit einem durch die Halsöffnung des Preforms eingefahrenen Reckdorn in axiale Richtung gereckt. Nach dem Reck-/Blasvorgang wird der fertige Kunststoffbehälter aus der Blasform entformt. Der erfindungsgemäss ausgebildete Preform zeichnet sich dadurch aus, dass der Preformkörper in einem Bereich unterhalb des Halsabschnitts wenigstens zwei axial voneinander beabstandete ringförmig umlaufende Bereiche aufweist, deren Wandstärke kleiner ist als eine Wandstärke in den angrenzenden Bereichen des Preformkörpers.

Die ringförmig umlaufenden Bereiche mit geringerer Wandstärke sind in einem Bereich des Preformkörpers ausgebildet, welcher bei dem streckgeblasenen Kunststoffbehälter den Schulterabschnitt bildet. Um das für die Ausformung der scharnierartigen Bereiche erforderliche hohe Gesamtstreckverhältnis von grösser 11 bei einem Längsstreckverhältnis von 2,5 bis 3,5 gegenüber üblicherweise etwa 2 zu erzielen, kann der Preform etwas kürzer ausgebildet sein als sonst üblich. Das Gesamtstreckverhältnis überschreitet den Wert von 20 üblicherweise nicht.

In einer Ausführungsvariante der Erfindung können die umlaufenden Bereiche mit geringerer Wandstärke als radial verlaufende Rillen in einer Innenwandung des Preformkörpers ausgebildet sein. Infolge des hohen Gesamtstreckverhältnisses weisen die Rillen in der Innenwandung des Preformkörpers nur eine verhältnismässig geringe Tiefe auf. Dadurch bleibt bei der Herstellung des Preforms im Spritzgiessverfahren oder im Fliesspressverfahren der Kern trotz geringfügiger Hinterschneidung in der Preforminnenwandung immer noch leicht entformbar.

Der Preform kann ansonsten konventionell ausgebildet sein und einen Supportring aufweisen, der radial von einer Aussenwandung des Preforms abragt und den Preformhals und den Preformköper voneinander trennt. Der Supportring dient beispielsweise zur axialen Abstützung des Preforms in der Blasform. Der Supportring bleibt üblicherweise auch an dem fertig streckgeblasenen Kunststoffbehälter erhalten und kann zum leichteren Transport des Kunststoffbehälters dienen. Die ringförmig umlaufenden Bereiche, beispielsweise die radialen Rillen in der Innenwandung und/oder Aussenwandung des Preformkörpers, sind in einem axialen Abstand vom Supportring im Preformkörper angeordnet. Dadurch behindert der Supportring beim fertig streckgeblasenen Kunststoffbehälter die axiale Beweglichkeit, insbesondere das Eintauchen, des Behälterhalses nicht. In einer Ausführungsvariante des Preforms kann dazu ein dem Supportring näher liegender ringförmig umlaufenden Bereich vom Supportring einen axialen Abstand aufweisen, der 4 mm bis 45 mm beträgt. Dieser Abstand bezieht sich dabei auf die Mitte des ringförmig umlaufenden Bereichs zur Mitte des Supportrings. Der für das unbehinderte Eintauchen des Behälterhalses im gewünschten Umfang erforderliche freie axiale Abstand des Supportrings von der Behälterschulter ergibt sich dann durch den Streckvorgang beim Streckblasverfahren. Weitere Vorteile und Merkmale der Erfindung ergeben sich aus der nachfolgenden Beschreibung eines Ausführungsbeispiels unter Bezugnahme auf die schematischen Zeichnungen. Es zeigen in nicht massstabsgetreuer Darstellung:
- Fig. 1: einen Axialschnitt eines Kunststoffbehälters gemäss der Erfindung;
- Fig. 2: einen Querschnitt des Kunststoffbehälter gemäss Fig. 1;
- Fig. 3a: eine vergrösserte Darstellung eines Behälterhalses und eines Schulterabschnitts des Kunststoffbehälters gemäss Fig. 1;
- Fig. 3b: eine Darstellung des Kunststoffbehälters gemäss Fig. 3a mit aufgesetztem Verschlussteil;
- Fig. 4a: eine Darstellung des Kunststoffbehälters gemäss Fig. 3a mit axial eingetauchtem Behälterhals;
- Fig. 4b: eine Darstellung des Kunststoffbehälters gemäss Fig. 4a mit aufgesetztem Verschlussteil;
- Fig. 5a: eine Darstellung des Kunststoffbehälters gemäss Fig. 3a mit axial ausgefahrenem Behälterhals;
- Fig. 5b: eine Darstellung des Kunststoffbehälters gemäss Fig. 5a mit aufgesetztem Verschlussteil; und
- Fig. 6: einen Preform zur Herstellung eines erfindungsgemässen Kunststoffbehälters in einem Streckblasverfahren.

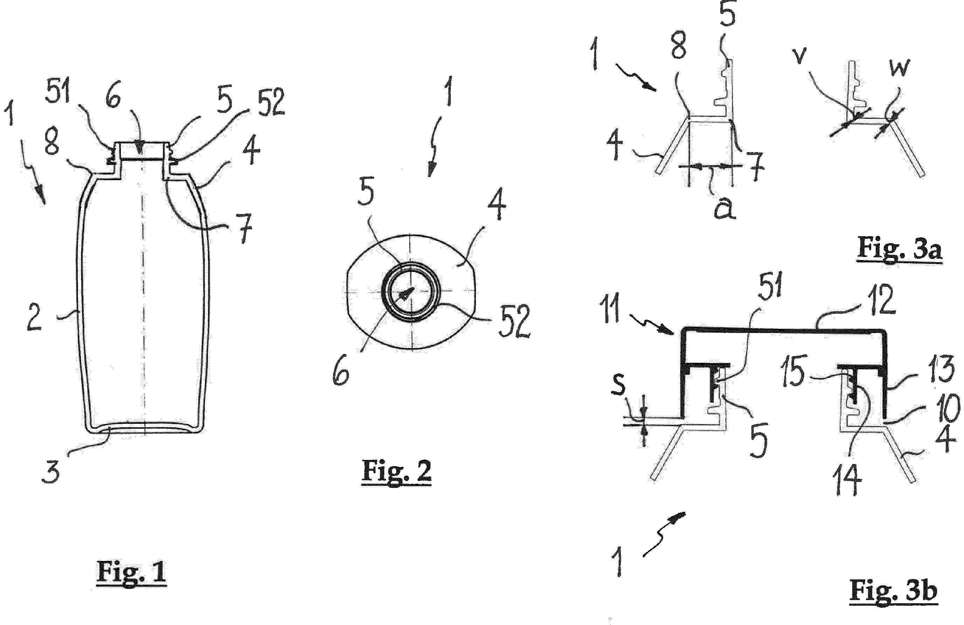

Fig. 1 zeigt schematisch einen erfindungsgemäss ausgebildeten Kunststoffbehälter, insbesondere eine Kunststoffflasche, der gesamthaft das Bezugszeichen 1 trägt. Der Kunststoffbehälter 1 ist in einem Streckblasverfahren aus einem zuvor gefertigten Preform hergestellt. Der Preform weist einen länglichen, röhrchenartigen Preformkörper auf, der an seinem einen Längsende mit einem Boden verschlossen ist und am anderen Längsende einen Halsabschnitt auf. Am Halsabschnitt des Preforms können Mittel zur formschlüssigen Festlegung eines mit korrespondierenden Eingriffsmitteln ausgestatteten Verschlussteils ausgebildet sein. Die Mittel zur formschlüssigen Festlegung eines Verschlussteils können beispielsweise an der Aussenwandung des Halsteils ausgebildete Gewindeabschnitte oder bajonettartige Vorsprünge oder entsprechende Vertiefungen sein. Die Herstellung des Preforms erfolgt meist in einem Spritzgiessverfahren. Es sind jedoch auch alternative Herstellverfahren für Preforms bekannt, beispielsweise Fliesspressen oder Extrusionsblasen. Die Herstellung der Preforms kann zeitlich und/oder räumlich getrennt vom nachfolgenden Streckblasverfahren erfolgen. In einem alternativen Verfahren kann der hergestellte Preform ohne zwischenzeitliche Abkühlung unmittelbar nach seiner Herstellung weiter verarbeitet werden. Beim Streckblasverfahren wird der Preform in eine Formkavität einer Blasform eingesetzt und durch ein mit Überdruck eingeblasenes Medium, üblicherweise Luft, in radialer und axialer Richtung aufgeweitet, insbesondere aufgeblasen. Dabei wird der Preform zusätzlich mit einem durch die Halsöffnung des Preforms eingefahrenen Reckdorn in axiale Richtung gereckt. Nach dem Reck-/Blasvorgang wird der fertige Kunststoffbehälter aus der Blasform entformt.

Der streckgeblasene Kunststoffbehälter 1 weist einen Behälterkörper 2 auf, dessen eines axiales Ende mit einem Behälterboden 3 verschlossen ist. Am dem Behälterboden 3 gegenüberliegenden Ende des Behälterkörpers 2 schliesst ein Schulterabschnitt 4 an. Schliesslich schliesst an den Schulterabschnitt 4 ein Behälterhals 5 mit einer Ausgiessöffnung 6 an. Die Kontur des Behälterhalses 5 kann dem Hals des Preforms entsprechen, aus dem der Kunststoffbehälter im Streckblasverfahren hergestellt ist, da dieser dabei üblicherweise nicht mehr verändert wird. Entsprechend kann der Behälterhals Mittel zur formschlüssigen Festlegung eines mit korrespondierenden Eingriffsmitteln ausgestatteten Verschlussteils aufweisen. Die Mittel zur formschlüssigen Festlegung eines Verschlussteils können, wie in Fig. 1 beispielsweise angedeutet, an der Aussenwandung des Halsteils ausgebildete Gewindeabschnitte 51 sein. Schliesslich kann der Behälterhals 5 auch noch einen im wesentlichen radial abragenden, in Umfangsrichtung verlaufenden Transferring 52 aufweisen, der beim Preform den Preformkörper vom Preformhals trennt und zur Erleichterung des Transports des Preforms und des daraus hergestellten Kunststoffbehälters 1 dient.

Der Schulterabschnitt 4 weist wenigstens zwei in Umfangsrichtung verlaufende scharnierartige Bereiche, nämlich einen inneren scharnierartigen Bereich 7 und einen äusseren scharnierartigen Bereich 8 auf. Die scharnierartigen Bereiche 7, 8 sind in einem Abstand a voneinander angeordnet und besitzen jeweils eine gegenüber den angrenzenden Bereichen verringerte Wandstärke. Der aus einem Preform hergestellte streckgeblasene Kunststoffbehälter weist ein Gesamtstreckverhältnis von grösser 11 bei einem Längsstreckverhältnis von 2,5 bis 3,5 auf.

Fig. 2 zeigt eine Draufsicht auf den Kunststoffbehälter 1 aus Fig. 1. Gemäss dem dargestellten Ausführungsbeispiel weist der Kunststoffbehälter 1 einen Behälterkörper 2 und einen Schulterabschnitt 5 mit einem ovalen Querschnitt auf. Derartige Kunststoffbehälter kommen vielfach für die Aufbewahrung von pastösem Füllgut, wie beispielsweise Ketchup, Sugo, Pesto, Saucen, Senf, Mayonnaise und dergleichen zum Einsatz. Sie werden oft mit einem Verschlussteil verschlossen, welches einen grösseren Querschnitt besitzt, als es der Durchmesser der Ausgiessöffnung 6 am Behälterhals 5 erfordern würde. Infolge ihres grösseren Durchmessers weist das Verschlussteil eine Deckplatte auf, die als Standfläche für eine sichere Überkopf-Lagerung des Kunststoffbehälters 1 dienen kann. Diese Art der Lagerung kann eine weitgehend restlose Entleerung des Kunststoffbehälters 1 erleichtern.

Fig. 3a zeigt schematisch den Behälterhals 5 und den axial daran anschliessenden Schulterabschnitt 4 des Kunststoffbehälters 1. An den scharnierartigen Bereichen, nämlich am inneren scharnierartigen Bereich 7 und dem äusseren scharnierartigen Bereich 8, weist der Kunststoffbehälter 1 jeweils Wandstärken auf, die kleiner sind als an den angrenzenden Bereichen. Eine erste Wandstärke v am inneren scharnierartigen Bereich 7 ist dabei kleiner als 0,7 mm. Am davon beabstandeten äusseren scharnierartigen Bereich 8 beträgt eine zweite Wandstärke w 0,05 mm bis 0,4 mm, vorzugsweise 0,1 mm bis 0,3 mm. Ein Übergang vom Behälterhals 5 zum inneren scharnierartigen Bereich 7 ist möglichst kantig ausgebildet. Analoges gilt für den Übergang vom äusseren scharnierartigen Bereich 8 zu den angrenzenden Bereichen des Schulterabschnitts 4. Der innere scharnierartige Bereich 7 und der äussere scharnierartige Bereich 8 können einen entlang des Schulterabschnitts 4 gemessenen Abstand a voneinander aufweisen, der 5 mm bis 25mm beträgt.

Fig. 3b zeigt den Behälterhals 5 mit aufgesetztem Verschlussteil 11. Das Verschlussteil 11 weist eine Deckplatte 12 auf, von der ein äusserer Mantel 13 abragt. Der äussere Mantel umgibt einen Verschlussstutzen 14, an dem die eigentlichen Eingriffsmittel, beispielsweise ein Innengewinde 15, ausgebildet sind. Das Innengewinde 15 greift in die Gewindeabschnitte 51 an der Aussenwandung des Behälterhalses 5. Der äussere Mantel 13 des Verschlussteils 11 weist eine axiale Länge auf, die derart bemessen ist, dass er den Verschlussstutzen überragt und bei einem auf einen leeren Kunststoffbehälter 1 aufgesetzten Verschlussteil 11 vor einem Abstützbereich 9 auf dem Schulterabschnitt 4 endet. Dadurch bleibt zwischen dem Rand des äusseren Mantels 12 und dem Abstützbereich 9 ein Ringspalt 10 frei. Der Ringspalt 10 kann eine Weite s aufweisen, die 2,5 mm bis 5,5 mm beträgt.

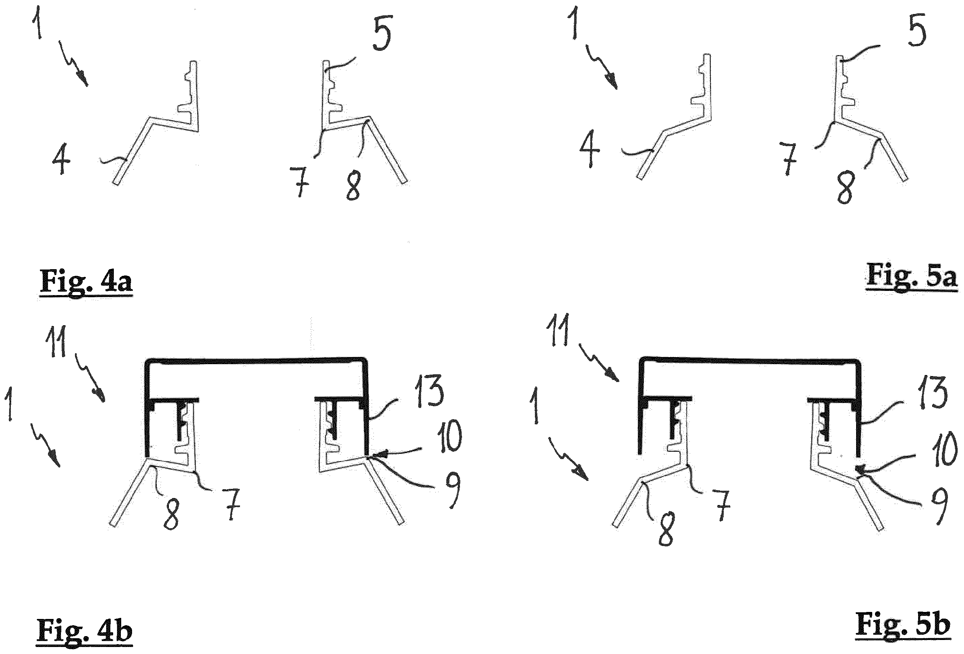

Fig. 4a und 4b zeigen den Behälterhals 5 und die Behälterschulter 4 in einer zu Fig. 3a und Fig. 3b analogen Schnittdarstellung. Fig. 4a zeigt den Behälterhals 5 ohne und Fig. 4b mit aufgesetztem Verschlussteil 11. Wegen eines im Kunststoffbehälter 1 herrschenden Unterdrucks ist der Behälterhals 5 in axiale Richtung in das Behälterinnere eingezogen. Dabei knickt der Schulterabschnitt 4 an den scharnierartigen Bereichen 7, 8 ein. Die axiale Auslenkung ist vorzugweise reversibel und beträgt beispielsweise 2 mm bis 5 mm. Das auf den Behälterhals 5 aufgesetzte, beispielsweise aufgeschraubte, Verschlussteil 11 macht die Eintauchbewegung mit. Dabei senkt sich der äussere Mantel 13 des Verschlussteils 11 und verringert sich die Weite des Ringspalts 10 zwischen dem Rand des äusseren Mantels 13 des Verschlussteils 11 und dem Abstützbereich 9 auf der Behälterschulter 4. Bei maximalem axialem Eintauchen des Behälterhalses 5 liegt der Rand des äusseren Mantels 13 auf dem Abstützbereich 9 des Schulterabschnitts 4 auf. Ein weiteres Eintauchen des Behälterhalses 5 ist dadurch verhindert.

Fig. 5a und Fig. 5b zeigen den Behälterhals 5 und den Schulterabschnitt 4 in zu Fig. 4a und 4b analogen Schnittdarstellungen. Infolge eines innerhalb des Kunststoffbehälters 1 herrschenden Überdrucks, wie er beispielsweise bei einem Heissduschen des gefüllten Kunststoffbehälters zum Pasteurisieren auftreten kann, hat sich der Behälterhals 5 axial in eine Richtung weg vom Behälterinneren gehoben. Der axiale Hub beträgt beispielsweise 2 mm bis 5 mm. Die scharnierartigen Bereiche 7, 8 erlauben diese Beweglichkeit des Behälterhalses 5 und des Schulterabschnitts 4. Vorzugsweise ist die Beweglichkeit der Scharniere, insbesondere der Hub des Behälterhalses 5, reversibel. Der Ringspalt 10 zwischen dem Rand des äusseren Mantels 13 des Verschlussteils 11 und dem Abstützbereich 9 an der Behälterschulter 4 ist gegenüber der Ausgangsstellung (Fig. 3b) etwas weiter. Dies ist für den Konsumenten von aussen aber praktisch nicht erkennbar.

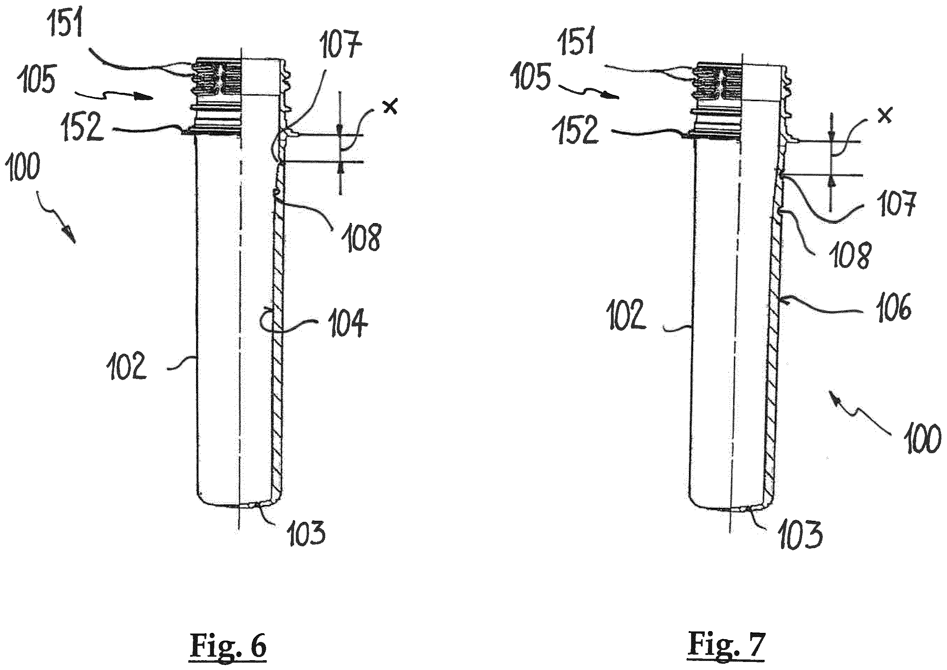

Fig. 6 und Fig. 7 zeigen jeweils einen Preform 100 zur Herstellung eines erfindungsgemäss ausgebildeten Kunststoffbehälters in einem Streckblasverfahren. Der Preform 100 weist einen länglichen, röhrchenartigen Preformkörper 102 auf, der an seinem einen Längsende mit einem Boden 103 verschlossen ist und am anderen Längsende einen Preformhals 105 aufweist. Am Preformhals 105 können Mittel zur formschlüssigen Festlegung eines mit korrespondierenden Eingriffsmitteln ausgestatteten Verschlussteils ausgebildet sein. Die Mittel zur formschlüssigen Festlegung eines Verschlussteils können beispielsweise an der Aussenwandung des Halsteils 105 ausgebildete Gewindeabschnitte 151 oder bajonettartige Vorsprünge oder entsprechende Vertiefungen sein. Die Herstellung des Preforms 100 erfolgt meist in einem Spritzgiessverfahren. Es sind jedoch auch alternative Herstellverfahren für Preforms bekannt, beispielsweise Fliesspressen oder Extrusionsblasen. Die Herstellung der Preforms 100 kann zeitlich und/oder räumlich getrennt vom nachfolgenden Streckblasverfahren erfolgen. In einem alternativen Verfahren kann der hergestellte Preform 100 ohne zwischenzeitliche Abkühlung unmittelbar nach seiner Herstellung weiter verarbeitet werden. Zum Streckblasen wird der Preform 100 in eine Formkavität einer Blasform eingesetzt und durch ein mit Überdruck eingeblasenes Medium, üblicherweise Luft, in radialer und axialer Richtung aufgeweitet, insbesondere aufgeblasen. Dabei wird der Preform 100 zusätzlich mit einem durch die Halsöffnung des Preforms eingefahrenen Reckdorn in axiale Richtung gereckt. Nach dem Reck-/Blasvorgang wird der fertige Kunststoffbehälter aus der Blasform entformt. Der erfindungsgemäss ausgebildete Preform 100 zeichnet sich dadurch aus, dass der Preformkörper 102 in einem Bereich unterhalb des Halsabschnitts 105 wenigstens zwei axial voneinander beabstandete ringförmig umlaufende Bereiche 107, 108 aufweist, deren Wandstärke jeweils kleiner ist als eine Wandstärke in den angrenzenden Bereichen des Preformkörpers 102.

Die ringförmig umlaufenden Bereiche 107, 108 mit geringerer Wandstärke sind in einem Bereich des Preformkörpers 102 ausgebildet, welcher bei dem streckgeblasenen Kunststoffbehälter den Schulterabschnitt bildet. Um das für die Ausformung der scharnierartigen Bereiche erforderliche hohe Gesamtstreckverhältnis von grösser 11 bei einem Längsstreckverhältnis von 2,5 bis 3,5 gegenüber üblicherweise etwa 2 zu erzielen, kann der Preform 100 etwas kürzer ausgebildet sein als sonst üblich. Das Gesamtstreckverhältnis des aus dem Preform 100 fertig streckgeblasenen Kunststoffbehälters überschreitet den Wertvon 20 üblicherweise nicht.

Die umlaufenden Bereiche 107, 108 mit geringerer Wandstärke können als radial verlaufende Rillen beispielsweise in einer Innenwandung des Preformkörpers 102 ausgebildet sein. Infolge des hohen Gesamtstreckverhältnisses weisen die rillenförmigen umlaufenden Bereiche 107, 108 in der Innenwandung 104 des Preformkörpers 102 nur eine verhältnismässig geringe Tiefe auf. Dadurch bleibt bei der Herstellung des Preforms im Spritzgiessverfahren oder im Fliesspressverfahren der Kern trotz geringfügiger Hinterschneidung in der Preforminnenwandung 104 immer noch leicht entformbar. Beispielsweise kann beim Spritzgiessen auch ein Spreizkern verwendet werden, um die Entformung des Preforms zu erleichtern.

In einer in Fig. 7 beispielsweise dargestellten alternativen Ausführungvariante des Preforms 100 können die rillenförmigen umlaufenden Bereiche 107, 108 auch in der Aussenwandung 106 des Preforms 100 angeordnet sein. Eine nicht näher dargestellte weitere Ausführungsvariante des Preforms kann eine Kombination von an der Innenwandung und an der Aussenwandung rillenförmigen umlaufenden Bereichen aufweisen. Schliesslich können die radial umlaufenden Bereiche jeweils auch von auf der selben axialen Höhe angeordneten Rillen an der Innen- und der Ausswenwandung des Preforms gebildet sein.

Der Preform 100 kann ansonsten konventionell ausgebildet sein und beispielsweise einen Supportring 152 aufweisen, der radial von einer Aussenwandung des Preforms abragt und den Preformhals und den Preformköper voneinander trennt. Der Supportring 152 dient beispielsweise zur axialen Abstützung des Preforms 100 in der Blasform. Der Supportring 152 bleibt üblicherweise auch an dem fertig streckgeblasenen Kunststoffbehälter erhalten und kann zum leichteren Transport des Kunststoffbehälters dienen. Die ringförmig umlaufenden Bereiche 107, 108, beispielsweise die radialen Rillen in der Innenwandung 104 des Preformkörpers 102, sind in einem axialen Abstand vom Supportring 152 im Preformkörper 102 angeordnet. Dadurch behindert der Supportring 152 beim fertig streckgeblasenen Kunststoffbehälter die axiale Beweglichkeit, insbesondere das Eintauchen, des Behälterhalses nicht. Beispielsweise kann dazu der dem Supportring 152 näher liegende ringförmig umlaufenden Bereich 107 vom Supportring 152 einen axialen Abstand x aufweisen, der 5 mm bis 25 mm beträgt. Der für das unbehinderte Eintauchen des Behälterhalses im gewünschten Umfang erforderliche freie axiale Abstand des Supportrings von der Behälterschulter ergibt sich dann durch den Streckvorgang beim Streckblasverfahren.

## Patentansprüche

1. Streckgeblasener Kunststoffbehälter, insbesondere Kunststoffflasche, mit einem Behälterkörper (2), dessen eines Längsende von einem Behälterboden (3) verschlossen ist und an dessen anderes Längsende ein Schulterabschnitt (4) anschliesst, und einem Behälterhals (5), der an den Schulterabschnitt (4) anschliesst, **dadurch gekennzeichnet, dass** der Schulterabschnitt (4) wenigstens zwei in Umfangsrichtung verlaufende scharnierartige Bereiche (7, 8) aufweist, die in einem Abstand (a) voneinander angeordnet sind und jeweils eine gegenüber den angrenzenden Bereichen verringerte Wandstärke (v, w) besitzen, und dass der streckgeblasene Kunststoffbehälter (1) ein Gesamtstreckverhältnis grösser als 11 bei einem Längsstreckverhältnis von 2,5 bis 3,5 aufweist.

2. Kunststoffbehälter nach Anspruch 1, **dadurch gekennzeichnet, dass** ein dem Behälterhals (5) näher liegender innerer scharnierartiger Bereich (7) eine erste Wandstärke (v) aufweist, die kleiner ist als 0,7 mm, und dass ein davon beabstandeter äusserer scharnierartiger Bereich (8) eine zweite Wandstärke (w) aufweist, die 0,05 mm bis 0,4 mm beträgt.

3. Kunststoffbehälter nach Anspruch 2, **dadurch gekennzeichnet, dass** die zweite Wandstärke (w) des äusseren scharnierartigen Bereichs (8) eine Wandstärke (w) aufweist, die 0,1 mm bis 0,3 mm beträgt.

4. Kunststoffbehälter nach einem der vorangehenden Ansprüche, **dadurch gekennzeichnet, dass** die scharnierartigen Bereiche (7, 8) für eine reversible negative und/oder reversible positive Auslenkung des Behälterhalses (5) in axialer Richtung ausgebildet sind.

5. Kunststoffbehälter nach Anspruch 4, **dadurch gekennzeichnet, dass** die reversible Auslenkbarkeit des Behälterhalses (5) ± 2 mm bis + 5 mm beträgt.

6. Kunststoffbehälter nach einem der vorangehenden Ansprüche, **dadurch gekennzeichnet, dass** die scharnierartigen Bereiche (7, 8) einen entlang der Behälterschulter (4) gemessenen Abstand (a) voneinander aufweisen, der 5 mm bis 25 mm beträgt.

7. Kunststoffbehälter nach einem der vorangehenden Ansprüche, **dadurch gekennzeichnet, dass** die scharnierartigen Bereiche (7, 8) radial innerhalb eines Abstützbereichs (9) für einen äusseren Mantel (13) eines auf den Behälterhals (5) aufsetzbaren Verschlussteils (11) angeordnet sind.

8. Kunststoffbehälter nach einem der vorangehenden Ansprüche, **dadurch gekennzeichnet, dass** er ein oder mehrschichtig ausgebildet ist und aus für das Streckblasverfahren geeigneten Kunststoffen gefertigt ist.

9. Kunststoffbehälter nach Anspruch 8, **dadurch gekennzeichnet, dass** er PET, PET-G, HDPE, PP, PS, PVC, PEN, Copolymere der angeführten Kunststoffe, Biokunststoffe wie beispielsweise PLA oder PEF, gefüllte Kunststoffe und Mischungen der genannten Kunststoffe umfasst.

10. Kunststoffbehälter nach einem der vorangehenden Ansprüche, **dadurch gekennzeichnet, dass** der Behälterkörper (2) und der daran anschliessende Schulterabschnitt (4) einen von der Kreisform abweichenden Querschnitt aufweisen.

11. Kunststoffbehälter nach Anspruch 10, **dadurch gekennzeichnet, dass** der Behälterkörper (2) und der daran anschliessende Schulterabschnitt (4) einen ovalen Querschnitt aufweisen.

12. Preform zur Herstellung eines Kunststoffbehälters gemäss einem der vorangehenden Ansprüche mit einem länglichen, röhrchenartigen Preformkörper (102), der an seinem einen Längsende mit einem Boden (103) verschlossen ist und am anderen Längsende einen Preformhals (105) aufweist, **dadurch gekennzeichnet, dass** der Preformkörper (102) in einem Bereich unterhalb des Preformhalses (105) wenigstens zwei axial voneinander beabstandete ringförmig umlaufende Bereiche (107, 108) aufweist, deren Wandstärke kleiner ist als eine Wandstärke in den angrenzenden Bereichen des Preformkörpers (102).

13. Preform nach Anspruch 12, **dadurch gekennzeichnet, dass** die ringförmig umlaufenden Bereiche (107, 108) geringerer Wandstärke als radial verlaufende Rillen in einer Innenwandung (104) und/oder Aussenwandung (106) des Preformkörpers (102) ausgebildet sind

14. Preform nach Anspruch 12 oder 13, **dadurch gekennzeichnet, dass** der Preformhals (105) und der Preformköper (102) durch einen radial von einer Aussenwandung abragenden Supportring (152) voneinander getrennt sind, und die ringförmig umlaufenden Bereiche (107, 108) in einem axialen Abstand vom Supportring (152) im Preformkörper (102) angeordnet sind.

15. Preform nach Anspruch 14, **dadurch gekennzeichnet, dass** ein dem Supportring (152) näher liegender ringförmig umlaufenden Bereich (107) vom Supportring (152) einen axialen Abstand (x) aufweist, der 5 mm bis 25 mm beträgt.

## Claims

1. Stretch blow-moulded plastic container, in particular plastic bottle, comprising a container body (2), one longitudinal end of which is closed by a container bottom (3) and the other longitudinal end of which is adjoined by a shoulder portion (4), and a container neck (5), which adjoins the shoulder portion (4), **characterized in that** the shoulder portion (4) has at least two hinge-like regions (7, 8), which run in a circumferential direction, are arranged at a distance (a) from one another and have in each case a wall thickness (v, w) that is reduced compared to the adjoining regions, and **in that** the stretch blow-moulded plastic container (1) has a total stretching ratio of greater than 11 for a longitudinal stretching ratio of 2.5 to 3.5.

2. Plastic container according to Claim 1, **characterized in that** an inner hinge-like region (7) lying closer to the container neck (5) has a first wall thickness (v) that is less than 0.7 mm, and **in that** an outer hinge-like region (8), at a distance from the inner region, has a second wall thickness (w) that is 0.05 mm to 0.4 mm.

3. Plastic container according to Claim 2, **characterized in that** the second wall thickness (w) of the outer hinge-like region (8) has a wall thickness (w) that is 0.1 mm to 0.3 mm.

4. Plastic container according to one of the preceding claims, **characterized in that** the hinge-like regions (7, 8) are formed for a reversible negative deflection and/or a reversible positive deflection of the container neck (5) in an axial direction.

5. Plastic container according to Claim 4, **characterized in that** the reversible deflectability of the container neck (5) is ±2 mm to ±5 mm.

6. Plastic container according to one of the preceding claims, **characterized in that** the hinge-like regions (7, 8) have a distance (a) from one another, measured along the container shoulder (4), that is 5 mm to 25 mm.

7. Plastic container according to one of the preceding claims, **characterized in that** the hinge-like regions (7, 8) are arranged radially inside a supporting region (9) for an outer skirt (13) of a closure part (11) that can be placed on the container neck (5).

8. Plastic container according to one of the preceding claims, **characterized in that** it is formed in one or more layers and is produced from plastics that are suitable for the stretch blow-moulding process.

9. Plastic container according to Claim 8, **characterized in that** it comprises PET, PET-G, HDPE, PP, PS, PVC, PEN, copolymers of the cited plastics, bioplastics such as for example PLA or PEF, filled plastics and mixtures of the stated plastics.

10. Plastic container according to one of the preceding claims, **characterized in that** the container body (2) and the shoulder portion (4) adjoining it have a cross section deviating from the form of a circle.

11. Plastic container according to Claim 10, **characterized in that** the container body (2) and the shoulder portion (4) adjoining it have an oval cross section.

12. Preform for producing a plastic container according to one of the preceding claims, with an elongated, tube-like preform body (102), which is closed by a bottom (103) at one of its longitudinal ends and has a preform neck (105) at the other longitudinal end, **characterized in that** the preform body (102) has in a region below the preform neck (105) at least two annular regions (107, 108), which are axially at a distance from one another and the wall thickness of which is less than a wall thickness in the adjoining regions of the preform body (102).

13. Preform according to Claim 12, **characterized in that** the annular regions (107, 108) are formed a smaller wall thickness than radially running grooves in an inner wall (104) and/or outer wall (106) of the preform body (102).

14. Preform according to Claim 12 or 13, **characterized in that** the preform neck (105) and the preform body (102) are separated from one another by a supporting ring (152) projecting radially from an outer wall, and the annular regions (107, 108) are arranged in the preform body (102) at an axial distance from the supporting ring (152).

15. Preform according to Claim 14, **characterized in that** an annular region (107) lying closer to the supporting ring (152) has an axial distance (x) from the supporting ring (152) that is 5 mm to 25 mm.

## Revendications

1. Récipient en matière plastique formé par étirage-soufflage, notamment bouteille en matière plastique, comprenant un corps de récipient (2), dont une extrémité longitudinale est fermée par un fond de récipient (3) et à l'autre extrémité longitudinale duquel se raccorde une partie d'épaule (4), et un col de récipient (5) qui se raccorde à la partie d'épaule (4), **caractérisé en ce que** la partie d'épaule (4) présente au moins deux zones de type charnières (7, 8) qui s'étendent dans la direction périphérique, sont disposées à une distance (a) l'une de l'autre et ont chacune une épaisseur de paroi (v, w) réduite par rapport aux zones adjacentes, et **en ce que** le récipient en matière plastique (1) formé par étirage-soufflage présente un rapport d'étirage total supérieur à 11, pour un rapport d'étirage longitudinal compris entre 2,5 et 3,5.

2. Récipient en matière plastique selon la revendication 1, **caractérisé en ce qu'**une zone de type charnière intérieure (7), plus proche du col de récipient (5), présente une première épaisseur de paroi (v) qui est inférieure à 0,7 mm, et **en ce qu'**une zone de type charnière extérieure (8), située à distance de celle-ci, présente une deuxième épaisseur de paroi (w) qui va de 0,05 mm à 0,4 mm.

3. Récipient en matière plastique selon la revendication 2, **caractérisé en ce que** la deuxième épaisseur de paroi (w) de la zone de type charnière extérieure (8) présente une épaisseur de paroi (w) qui est comprise entre 0,1 mm et 0,3 mm.

4. Récipient en matière plastique selon l'une des revendications précédentes, **caractérisé en ce que** les zones de type charnières (7, 8) sont conçues pour une déviation négative réversible et/ou une déviation positive réversible du col de récipient (5), dans la direction axiale.

5. Récipient en matière plastique selon la revendication 4, **caractérisé en ce que** la possibilité de déviation réversible du col de récipient (5) est comprise entre ± 2 mm et ± 5 mm.

6. Récipient en matière plastique selon l'une des revendications précédentes, **caractérisé en ce que** les zones de type charnières (7, 8) présentent une distance (a) réciproque, mesurée le long du col de récipient (5), qui est comprise entre 5 mm et 25 mm.

7. Récipient en matière plastique selon l'une des revendications précédentes, **caractérisé en ce que** les zones de type charnières (7, 8) sont disposées radialement à l'intérieur d'une zone d'appui (9) pour une enveloppe extérieure (13) d'un élément de fermeture (11) pouvant être rapporté sur le col de récipient (5).

8. Récipient en matière plastique selon l'une des revendications précédentes, **caractérisé en ce qu'**il est réalisé en une ou plusieurs couches et est fabriqué à partir de matières plastiques adaptées au procédé d'étirage-soufflage.

9. Récipient en matière plastique selon la revendication 8, **caractérisé en ce qu'**il comprend PET, PET-G, HDPE, PP, PS, PVC, PEN, des copolymères des matières plastiques citées, des matières bioplastiques, telles que PLA ou PEF, des matières plastiques chargées et des mélanges de matières plastiques citées.

10. Récipient en matière plastique selon l'une des revendications précédentes, **caractérisé en ce que** le corps de récipient (2) et la partie d'épaule (4) qui s'y raccorde présentent une section qui diffère de la forme circulaire.

11. Récipient en matière plastique selon la revendication 10, **caractérisé en ce que** le corps de récipient (2) et la partie d'épaule (4) qui s'y raccorde présentent une section ovale.

12. Préforme destinée à fabriquer un récipient en matière plastique selon l'une des revendications précédentes, comprenant un corps de préforme (102) allongé en forme de petit tube, qui est fermé par un fond (103) à l'une de ses extrémités longitudinales et présente un col de préforme (105) à son autre extrémité longitudinale, **caractérisée en ce que** le corps de préforme (102), dans une région située au-dessous du col de préforme (105), présente au moins deux zones périphériques circulaires (107, 108) qui sont espacées axialement l'une de l'autre et dont l'épaisseur de paroi est inférieure à une épaisseur de paroi dans les zones adjacentes du corps de préforme (102).

13. Préforme selon la revendication 12, **caractérisée en ce que** les zones périphériques circulaires (107, 108) d'épaisseur de paroi réduite sont réalisées sous forme de rainures s'étendant dans la direction radiale, dans une paroi intérieure (104) et/ou une paroi extérieure (106) du corps de préforme (102).

14. Préforme selon la revendication 12 ou 13, **caractérisée en ce que** le col de préforme (105) et le corps de préforme (102) sont séparés l'un de l'autre par un anneau support (152) faisant saillie radialement à partir d'une paroi extérieure, et que les zones périphériques circulaires (107, 108) sont disposées dans le corps de préforme (102), à une distance axiale par rapport à l'anneau support (152)

15. Préforme selon la revendication 14, **caractérisée en ce qu'**une zone périphérique circulaire (107) qui est plus proche de l'anneau support (152) présente une distance axiale (x) par rapport à l'anneau support (152) qui est comprise entre 5 mm et 25 mm.
